# EUROPEAN PATENT APPLICATION

(11) **EP 4 428 560 A1**
(43) Date of publication of application: **11.09.2024**
(21) Application number: 22887212.3
(22) Date of filing: 31.10.2022
(51) Int. Cl.: G01S 1/68, F24F 11/62, G01S 5/14, H05B 47/11

(54) **INFORMATION PROCESSING SYSTEM, INFORMATION PROCESSING DEVICE, INFORMATION PROCESSING METHOD, INFORMATION PROCESSING PROGRAM, AIR CONDITIONER, AND LIGHTING DEVICE**

(30) Priority: 01.11.2021 WO PCT/JP2021/040311
(71) Applicant: Aeterlink Corp., Tokyo 130-0013 (JP)
(72) Inventor: KODATE Naoto, Tokyo 100-0004 (JP); TANABE Yuji, Tokyo 100-0004 (JP); MURAI Akito, Tokyo 100-0004 (JP); KATOGI Ken, Tokyo 100-0004 (JP); IWASA Ryo, Tokyo 100-0004 (JP); HAYASAKI Satoshi, Tokyo 100-0004 (JP)
(74) Representative: AWA Sweden AB
(86) International application number: PCT/JP2022/040579
(87) International publication number: WO 2023/074887

(57) **Abstract**

An information processing system includes one or more transmitters respectively capable of transmitting first signals, a plurality of sensor devices respectively capable of receiving first signals, disposed at different positions, and capable of measuring predetermined physical quantities, and an information processing device capable of acquiring from the plurality of sensor devices, respectively, the physical quantities measured by the plurality of sensor devices and second signals corresponding to the first signals transmitted from the transmitters, in which the information processing device includes a storage unit that stores first correspondence information obtained by associating respective positions where the transmitters are disposed, the first signals respectively transmitted by the transmitters, and the second signals respectively corresponding to the first signals, and an estimation unit that specifies, among the transmitters, the transmitter that transmits the first signal corresponding to the second signal transmitted from the sensor device based on the first correspondence information stored in the storage unit, to estimate that the sensor device that transmits the second signal is present near the transmitter.

## Description

### [TECHNICAL FIELD]

The present disclosure relates to an information processing system, an information processing device, an information processing method, an information processing program, air conditioning equipment, and a lighting device.

### [BACKGROUND ART]

Conventionally, there has been a device that specifies a position of a sensor device. A position specifying device described in Patent Literature 1 includes a barometric pressure sensor and a reader that receives information about a barometric pressure measured by the barometric pressure sensor. Readers are respectively disposed on floors of a building. For each of the readers, an upper limit and a lower limit of the barometric pressure measured by the barometric pressure sensor disposed on the floor are set. The reader specifies that the barometric pressure sensor that measures a barometric pressure between the upper limit and the lower limit of the barometric pressure is present on the floor on which the reader is disposed.

### [CITATION LIST]

### [PATENT LITERATURE]

[Patent Literature 1] Japanese Patent Laid-Open No. 2021-124442

### [SUMMARY OF INVENTION]

### [TECHNICAL PROBLEM]

The above-described position specifying device specifies a position in a height direction using the barometric pressure, and cannot specify the position when the barometric pressure cannot be measured. When a position of an object is specified, a position in a horizontal direction may be required to be specified.

The present disclosure provides an information processing system, an information processing device, an information processing method, an information processing program, air conditioning equipment, and a lighting device each enabling a position of a sensor device to be specified.

### [SOLUTION TO PROBLEM]

An information processing system according to an aspect includes one or more transmitters that wirelessly transmit power, wherein each of the transmitters is capable of transmitting a different first signal, a plurality of sensor devices, respectively arranged at different positions, being capable of measuring predetermined physical quantity, and having receivers which are capable of receiving a power transmitted from the transmitter and receiving the first signal, and an information processing device being capable of acquiring, from the plurality of sensor devices, the physical quantity measured by each of the plurality of sensor devices and a second signal corresponding to the first signal transmitted from each of the transmitters, wherein the information processing device comprises a storage unit storing a first correspondence information associating a position where the transmitter is arranged, the first signal transmitted by the transmitter, and the second signal corresponding to the first signal, and an estimation unit estimating that the sensor device, transmitting the second signal, is positioned near the transmitter by identifying, among the transmitters, the transmitter transmitting the first signal corresponding to the second signal transmitted from the sensor device based on the first correspondence information stored in the storage unit.

### [ADVANTAGEOUS EFFECT OF INVENTION]

According to the aspect, the transmitter that transmits the first signal corresponding to the second signal transmitted from the sensor device is specified among the plurality of transmitters based on the first correspondence information obtained by associating the respective positions where the transmitters are disposed, the first signals respectively transmitted by the transmitters, and the second signals respectively corresponding to the first signals, to estimate that the sensor device that transmits the second signal is present near the transmitter, thereby making it possible to specify the position of the sensor device.

### [BRIEF DESCRIPTION OF DRAWINGS]

[Figure 1] Figure 1 is a diagram for illustrating an information processing system according to one embodiment.
[Figure 2] Figure 2 is a block diagram for illustrating a transmitter according to the one embodiment.
[Figure 3] Figure 3 is a diagram for illustrating an example of an antenna.
[Figure 4] Figure 4 is a block diagram for illustrating a sensor device according to the one embodiment.
[Figure 5] Figure 5 is a diagram for illustrating an example of a sensor transmission unit.
[Figure 6] Figure 6 is a diagram for illustrating an example of a chair in which the sensor device is disposed.
[Figure 7] Figure 7 is a diagram for illustrating an example of a sensor receiving unit.
[Figure 8] Figure 8 is a block diagram for illustrating an information processing device according to the one embodiment.
[Figure 9] Figure 9 is a flowchart for illustrating an information processing method according to the one embodiment.
[Figure 10] Figure 10 is a diagram for illustrating an example of a method for measuring a position of a sensor device according to a modification of the one embodiment.
[Figure 11] Figure 11 is a diagram for illustrating another example of the method for measuring a position of the sensor device according to the modification of the one embodiment.
[Figure 12] Figure 12 is a diagram for illustrating still another example of the method for measuring a position of the sensor device according to the modification of the one embodiment.

### [DESCRIPTION OF EMBODIMENT]

An embodiment of the present disclosure will be described below with reference to the drawings. In all figures for illustrating the embodiment, common components are respectively denoted by the same reference numerals, and description thereof is not repeated. The following embodiment does not unduly limit a content of the present disclosure described in the claims. All the components illustrated in the embodiment are not necessarily limited to essential components in the present disclosure. Each of the figures is a schematic view, and is not necessarily strictly depicted.

In the following description, "processor" is one or more processors. Although typically a microprocessor such as a CPU (central processing unit), at least one processor may be another type of processor such as a GPU (graphics processing unit). The at least one processor may be a single core or multi-core processor.

The at least one processor may be a processor in a broad sense such as a hardware circuit (e.g., an FPGA (field-programmable gate array) or an ASIC (application specific integrated circuit) that performs a part or the whole of processing.

Although an expression "xxx table" may describe information in which an output is obtained relative to an input in the following description, this information may be data having any structure or may be a learning model such as a neural network in which an output relative to an input is generated. Therefore, "xxx table" can be said as "xxx information".

In the following description, a configuration of each of tables is an example, the one table may be divided into two or more tables, or all or some of the two or more tables may be one table.

Although processing may be described using "program" as a subject in the following description, the program is executed by a processor so that determined processing is appropriately performed while using a storage unit and/or an interface unit, for example. Accordingly, a subject of the processing may be a processor (or a device such as a controller having the processor).

The program may be installed in a device such as a computer, or may be in a recording medium (e.g., a non-transitory recording medium) readable by a program distribution server or a computer. In the following description, two or more programs may be implemented as one program, or one program may be implemented as two or more programs.

Although an identification number is used as information for identifying various targets in the following description, identification information of a type other than the identification number (e.g., an identifier including a letter and a symbol) may be adopted.

In the following description, reference symbols (or common symbols among reference symbols) may be used when description is made without distinguishing elements of the same type, and identification numbers (or reference symbols) may be used when description is made by distinguishing elements of the same type.

In the following description, a control line and an information line, which may be required in description, are illustrated, and all control lines and information lines are not necessarily illustrated in products. All components may be connected to one another.

### [Outline of Information Processing System 1]

First, an outline of an information processing system 1 according to one embodiment will be described.

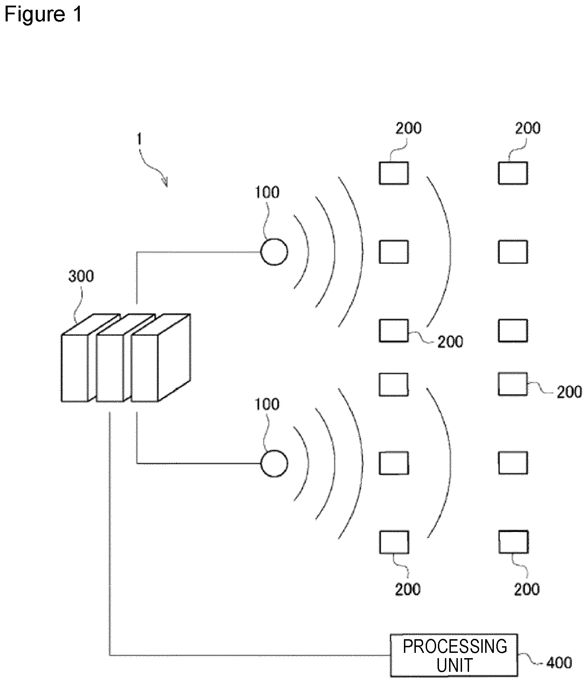

Figure 1 is a diagram for illustrating the information processing system 1 according to the one embodiment.

The information processing system 1 includes a transmitter 100, a sensor device 200, and an information processing device 300, for example.

There may be a plurality of transmitters 100. The transmitter 100 wirelessly transmits power to the sensor device 200 and transmits a first signal, for example. The plurality of transmitters 100 may respectively transmit different first signals, for example. An example of the first signal may be various signals transmitted from the transmitter to the sensor device or may be a specific signal previously determined.

There may be a plurality of sensor devices 200. The sensor device 200 may perform various operations including an operation for receiving the power transmitted from the transmitter 100 and measuring a predetermined physical quantity. The sensor device 200 may transmit the predetermined physical quantity to the information processing device 300.

The sensor device 200 receives the first signal transmitted from the transmitter 100 and transmits a second signal corresponding to the first signal to the information processing device 300. When receiving a first signal transmitted by the transmitter 100, the sensor device 200 may transmit the first signal as a second signal to the information processing device 300, for example. Alternatively, when receiving a first signal transmitted by the transmitter 100, the sensor device 200 may transmit a second signal in one-to-one correspondence with the first signal to the information processing device 300, for example. The sensor device 200 may transmit, as a second signal in one-to-one correspondence with a first signal, a second signal previously determined in response to the first signal to the information processing device 300, for example.

Examples of the information processing device 300 may include computers such as a server, a desk top, a lap top, and a tablet.

The information processing device 300 receives a predetermined physical quantity and a second signal that are transmitted from each of the plurality of sensor devices 200. The information processing device 300 refers to (first) correspondence information and estimates a position of the sensor device 200 that transmits the second signal, for example. An example of the first correspondence information may be information obtained by associating a position where each of the plurality of transmitters 100 is disposed, a first signal transmitted by the transmitter 100, and a second signal corresponding to the first signal. That is, the information processing device 300 first specifies, among the plurality of transmitters 100, the transmitter 100 that transmits the first signal corresponding to the second signal transmitted from the sensor device 200 based on the first correspondence information. Then, the information processing device 300 estimates that the sensor device 200 that transmits the second signal is present near the specified transmitter 100.

### [Details of Information Processing System 1]

Then, details of the information processing system 1 according to the one embodiment will be described.

### [Transmitter 100]

First, details of the transmitter 100 according to the one embodiment will be described.

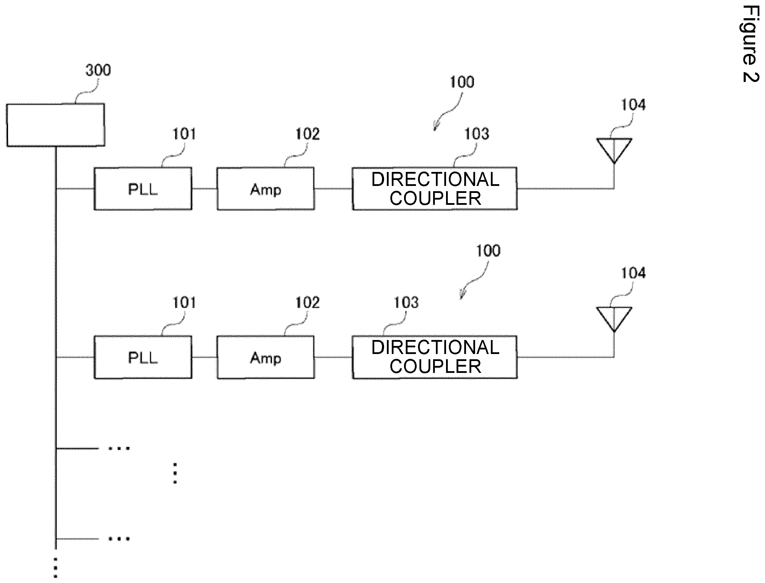

Figure 2 is a block diagram for illustrating the transmitter 100 according to the one embodiment.

There may be a plurality of transmitters 100, for example (see Figure 1). Each of the transmitters 100 wirelessly transmits power to the sensor device 200, for example. The plurality of transmitters 100 may be able to respectively transmit different first signals, for example. An example of the first signal may be various signals or may be a previously determined specific signal. The transmitter 100 may transmit a first signal when transmitting the power, for example. The transmitter 100 may always transmit the first signal or may transmit the first signal at a predetermined timing, for example. An example of the predetermined timing may be each predetermined time period, a timing at which a sensor device 200 is newly disposed, or any other timing.

As illustrated in Figure 2, each of the plurality of transmitters 100 may include a directional coupler 103 for a signal of power transmitted from the antenna 104. That is, the transmitter 100 may include a phase locked loop (PLL) circuit 101, an amplifier circuit (Amp.) 102, a directional coupler 103, and an antenna 104, for example. An example of the phase locked loop circuit 101 may be a circuit that returns some of inputted signals and outputs the signals respective phases of which are synchronized. An example of the amplifier circuit 102 may be a circuit that amplifies a signal. An example of the directional coupler 103 may be equipment capable of taking out some of signals (traveling waves) inputted from the amplifier circuit 102 side and taking out some of signals (reflected waves) inputted from the antenna 104 side.

### [Sensor Device 200]

Then, details of the sensor device 200 according to the one embodiment will be described.

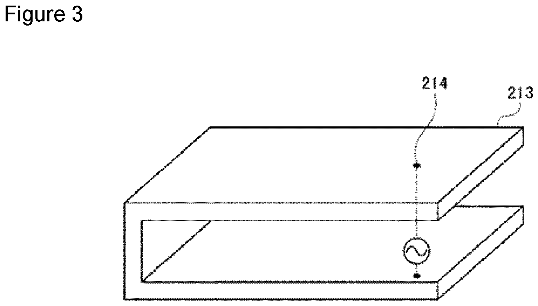

Figure 3 is a diagram for illustrating an example of an antenna 213.

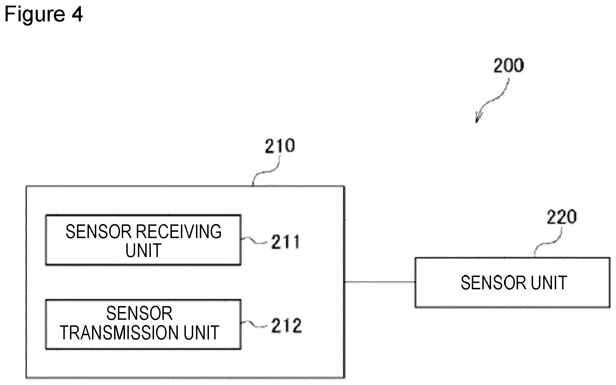

Figure 4 is a block diagram for illustrating the sensor device 200 according to the one embodiment.

There may be a plurality of sensor devices 200, for example. The plurality of sensor devices 200 are respectively disposed at different positions. Each of the sensor devices 200 may be disposed at any position or may be disposed at a specific position, for example. The sensor device 200 includes a receiver that receives power transmitted by the transmitter 100 and can receive a first signal. The sensor device 200 can measure a predetermined physical quantity.

The sensor device 200 includes a sensor communication unit 210 and a sensor unit 220, for example.

The sensor communication unit 210 includes a sensor receiving unit 211 and a sensor transmission unit 212.

The sensor receiving unit 211 may be an example of the above-described receiver. The sensor receiving unit 211 may receive the power transmitted from the transmitter 100, for example. The sensor receiving unit 211 may receive the first signal transmitted from the transmitter 100, for example.

The sensor transmission unit 212 may transmit a predetermined physical quantity measured by the sensor unit 220 to the information processing device 300, for example. The sensor transmission unit 212 may transmit a second signal corresponding to a first signal to the information processing device 300, for example. Further, the sensor transmission unit 212 may transmit identification information for identifying each of the plurality of sensor devices 200 to the information processing device 300, for example. The identification information may include an identification content (e.g., a content including characters, numerals, and symbols) inherent in each of the plurality of sensor devices 200, for example. The identification content may be stored in each of the sensor devices 200, for example. As an example, the identification information may be included in the second signal.

The sensor communication unit 210 (e.g., the sensor receiving unit 211) may include the antenna 213 illustrated as an example in Figure 3, or may include other various antennas. The antenna 213 illustrated as an example in Figure 3 is of a type including two flat plates having their respective one ends connected to each other and having their respective other ends provided with power feeding points 214.

The sensor unit 220 may measure a predetermined physical quantity, for example. Examples of the predetermined physical quantity may include temperature, humidity, illuminance, and carbon dioxide, or may be various physical quantities in addition to these.

The sensor unit 220 may have a function of controlling the sensor device 200. That is, the sensor unit 220 may control the sensor transmission unit 212 (the sensor communication unit 210) to transmit, when the sensor receiving unit 211 (the sensor communication unit 210) receives a first signal, a second signal corresponding to the first signal to the information processing device 300. In this case, the sensor unit 220 may perform control to transmit, when the sensor receiving unit 211 receives a first signal, the first signal as a second signal. Alternatively, the sensor unit 220 may perform control to transmit, when the sensor receiving unit 211 receives a first signal, a second signal in one-to-one correspondence with the first signal, for example. In this case, the sensor unit 220 may perform control to transmit, as a second signal in one-to-one correspondence with a first signal, a second signal previously determined in response to the first signal, for example.

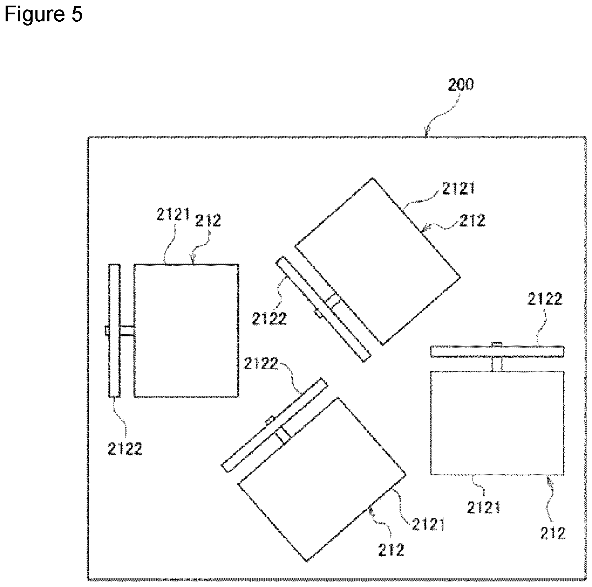

Figure 5 is a diagram for illustrating an example of the sensor transmission unit 212.

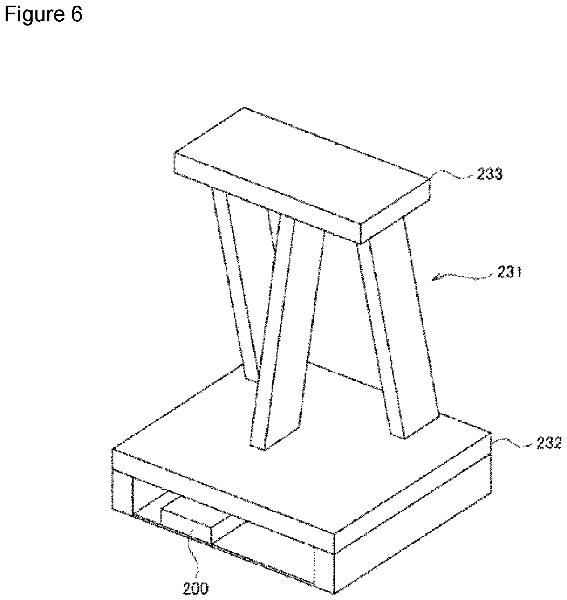

Figure 6 is a diagram for illustrating an example of a chair 231 in which the sensor device 200 is disposed.

A plurality of sensor transmission units 212 may be disposed in the above-described sensor device 200, as illustrated as an example in Figure 5. Although four sensor transmission units 212 are disposed in the sensor device 200 in a case illustrated in Figure 5, one or more sensor transmission units 212 may be disposed in the sensor device 200 in consideration of directivity of an antenna 2122 or the like, i.e., such that a radio wave can be radiated in all directions or in a predetermined direction, for example. The sensor transmission unit 212 in the sensor device 200 illustrated in Figure 5 includes a housing 2121 in which a transmission circuit (not illustrated) is disposed, a heat sink (not illustrated) disposed in the housing 2121, the antenna 2122, and the like. In the case illustrated in Figure 5, the antenna 2122 may be a bar antenna or the like. The antenna 2122 illustrated in Figure 5 has directivity of radio wave radiation. Accordingly, in the case illustrated in Figure 5, the four sensor transmission units 212 are provided, to radiate the radio wave in all directions as a whole by respectively orienting the antennas 2122 in different directions.

The sensor device 200 illustrated in Figure 5 may be disposed in the chair 231 or the like, as illustrated in Figure 6. The sensor device 200 may be disposed on a plate surface 232 contacting a floor surface of the chair 231. On a seat surface 233 of the chair 231, the sensor receiving unit 211 (not illustrated in Figure 6) or the like (on the receiving side), described below, may be disposed.

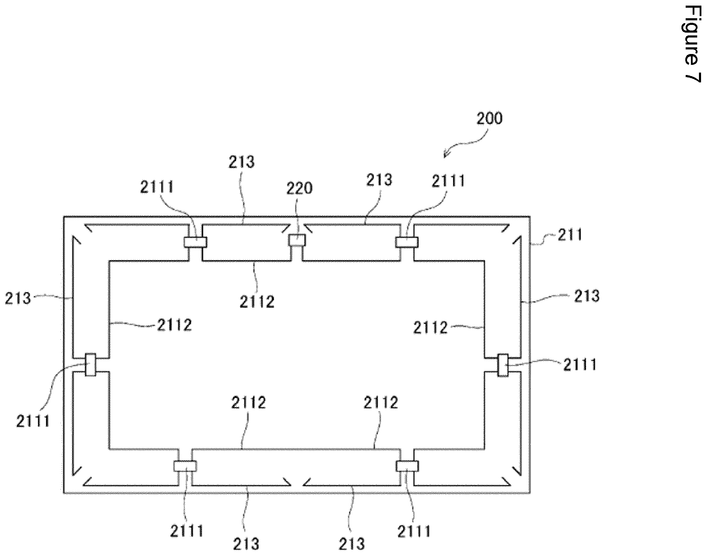

Figure 7 is a diagram for illustrating an example of the sensor receiving unit 211.

The sensor receiving unit 211 may have a configuration or the like, as illustrated as an example in Figure 7. The sensor receiving unit 211 may receive a signal (information) transmitted from the information processing device 300, for example. The sensor receiving unit 211 may be disposed on the seat surface 233 of the chair 231 illustrated in Figure 6, for example (the sensor receiving unit 211 is not illustrated in Figure 6). The sensor receiving unit 211 may include a plurality of antennas 213, for example. Although the sensor receiving unit 211 includes six antennas 213 in a case illustrated in Figure 7, the number of antennas 213 is not limited to that (six) as illustrated. The plurality of antennas 213 may be connected to each other via a rectifier 2111 by a DC line 2112, for example. The DC line 2112 may be connected to the sensor unit 220, for example. The antenna 213 is not limited to a configuration illustrated in Figure 3, but may have various configurations including a bar antenna.

### [Information Processing Device 300]

Then, details of the information processing device 300 according to the one embodiment will be described.

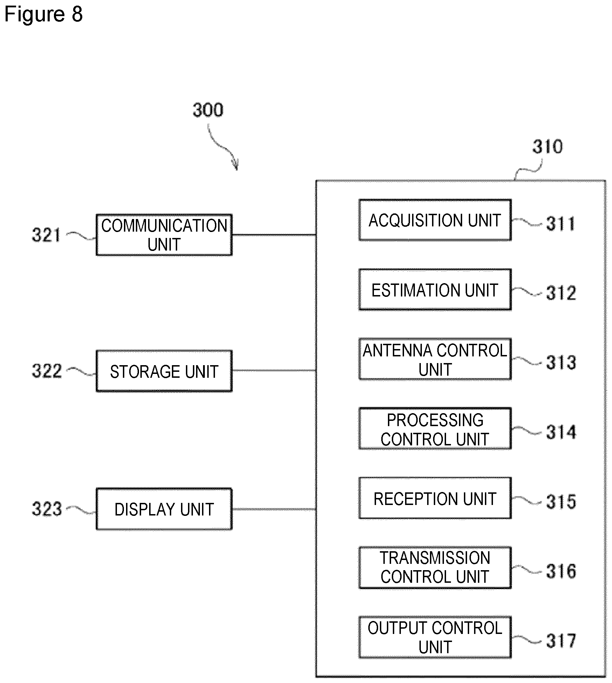

Figure 8 is a block diagram for illustrating the information processing device 300 according to the one embodiment.

The information processing device 300 can acquire from each of the plurality of sensor devices 200 a physical quantity measured by the sensor device 200 and a second signal corresponding to a first signal transmitted from each of the plurality of transmitters 100.

The information processing device 300 includes a communication unit 321, a storage unit 322, a display unit 323, and a control unit 310, for example. Each of the communication unit 321, the storage unit 322, and the display unit 323 may be an example of an output unit, for example. The control unit 310 includes an acquisition unit 311, an estimation unit 312, an antenna control unit 313, a processing control unit 314, a reception unit 315, a transmission control unit 316, and an output control unit 317, for example. The control unit 310 may include an arithmetic processing unit, for example, in the information processing device 300. The control unit 310 (e.g., the arithmetic processing unit) appropriately reads out and executes various types of programs stored in the storage unit 322, for example, so that respective functions of the units (e.g., the acquisition unit 311, the estimation unit 312, the antenna control unit 313, the processing control unit 314, the reception unit 315, the transmission control unit 316, and the output control unit 317) may be implemented.

The communication unit 321 can transmit and receive various types of information to and from a device (external device) outside the information processing device 300, for example. The communication unit 321 can communicate with the transmitter 100, the sensor device 200, and a processing unit 400, described below, for example.

The storage unit 322 may store various types of information and programs, for example. Examples of the storage unit 322 may include a memory, a solid state drive, and a hard disk drive.

The storage unit 322 stores (first) correspondence information obtained by associating a position where the transmitter 100 is disposed, a first signal transmitted by the transmitter 100, and a second signal corresponding to the first signal. An example of the first correspondence information may be information obtained by associating, when the sensor device 200 returns a first signal as a second signal, as described above, a position where each of the plurality of transmitters 100 is disposed and a first signal transmitted from the transmitter 100. An example of the first correspondence information may be information obtained by associating, when the sensor device 200 returns a second signal in one-to-one correspondence with a first signal, as described above, a position where each of the plurality of transmitters 100 is disposed, a first signal transmitted from the transmitter 100, and a second signal in one-to-one correspondence with the first signal.

The display unit 323 can display various characters, symbols, and images, for example.

The acquisition unit 311 acquires from the plurality of sensor devices 200, respectively, physical quantities measured by the plurality of sensor devices 200 and second signals corresponding to first signals transmitted from the plurality of transmitters 100. That is, the acquisition unit 311 acquires the physical quantity and the second signal from each of the plurality of sensor devices 200 via the communication unit 321, for example. The acquisition unit 311 may acquire identification information from each of the plurality of sensor devices 200 via the communication unit 321, for example.

The estimation unit 312 specifies, among the plurality of transmitters 100, the transmitter 100 that transmits the first signal corresponding to the second signal acquired by the acquisition unit 311 and transmitted from the sensor device 200 based on the first correspondence information stored in the storage unit 322, to estimate that the sensor device 200 that transmits the second signal is present near transmitter 100. That is, the estimation unit 312 refers to the first correspondence information and specifies the first signal in one-to-one correspondence with the second signal, for example. Further, the estimation unit 312 refers to the first correspondence information and specifies the transmitter 100 that has transmitted the first signal specified as described above, for example. The estimation unit 312 can specify the sensor device 200 that has transmitted the second signal because it acquires the identification information from the sensor device 200, for example. Therefore, the estimation unit 312 can estimate that the sensor device 200 that has transmitted the second signal is present near the transmitter 100 specified as described above.

The above-described sensor device 200 may be able to receive first signals respectively transmitted from the plurality of the transmitter 100, for example. In this case, the sensor device 200 may transmit second signals respectively corresponding to the plurality of first signals to the information processing device 300. Alternatively, the sensor device 200 may contain in the second signal information about a radio wave intensity of each of the plurality of first signals when receiving the first signal.

The acquisition unit 311 may acquire a second signal corresponding to a plurality of first signals from the one sensor device 200 (each of the plurality of sensor devices 200) via the communication unit 321, for example.

The estimation unit 312 can estimate, when the radio wave intensity of the first signal transmitted from the transmitter 100 is previously determined, for example, a distance from the transmitter 100 to the sensor device 200 based on the radio wave intensity of the first signal when receiving the first signal by the sensor device 200. That is, the estimation unit 312 can estimate, assuming that the radio wave intensity of the first signal is attenuated depending on a transmission distance of the first signal, for example, the distance from the transmitter 100 to the sensor device 200 based on a radio wave intensity when the transmitter 100 transmitting the first signal and a radio wave intensity when the sensor device 200 receiving the first signal.

When receiving a plurality of first signals respectively transmitted from the different transmitters 100 by the one sensor device 200 (each of the plurality of sensor devices 200), for example, the estimation unit 312 can estimate respective distances between the plurality of transmitters 100 and the sensor device 200. That is, the estimation unit 312 can estimate a position of the sensor device 200 based on the respective distance between the plurality of transmitters 100 and the sensor device 200 and a position of the transmitter 100 recorded in first correspondence information, for example.

The antenna control unit 313 may include the antenna control unit 313 that performs control such that directivity of the antenna 104 in the transmitter 100 is oriented toward a position of the sensor device 200 estimated by the estimation unit 312. That is, when the antenna 104 has directivity, the antenna control unit 313 may control an orientation of the antenna 104 to orient a direction in which a radio wave intensity of a first signal increases toward the sensor device 200 such that power transmitted from the antenna 104 and the radio wave intensity relatively increase. In this case, the antenna control unit 313 may control the orientation of the antenna 104 using various types of methods and equipment, for example.

The antenna control unit 313 may control, based on the position of the sensor device 200 estimated by the estimation unit 312, the antenna 104 in the transmitter 100 closest to the sensor device 200. The antenna control unit 313 may perform control, when the estimation unit 312 estimates the position of the sensor device 200, for example, such that the antenna 104 in the transmitter 100 closest to the position of the sensor device 200 is oriented toward the sensor device 200. In this case, the antenna control unit 313 may specify the transmitter 100 closest to the position of the sensor device 200 while referring to a position of the transmitter 100 recorded in first correspondence information.

The processing control unit 314 may control, based on a physical quantity measured by the sensor device 200 the position of which is estimated by the estimation unit 312, the processing unit 400 to perform predetermined processing for a position where the sensor device 200 is disposed.

As a specific example, the processing unit 400 may be an air conditioner (air-conditioning equipment).

In this case, the sensor device 200 may include a temperature sensor. The sensor device 200 measures a temperature as a physical quantity using the temperature sensor.

The processing control unit 314 may control, when a temperature measured by the temperature sensor changes, the air conditioner by transmitting to the air conditioner a control signal for adjusting a temperature at a position where the temperature sensor is disposed. The processing control unit 314 may control, when the temperature measured by the temperature sensor rises (falls), the air conditioner such that a temperature at a position where the sensor device 200 that has measured the temperature is disposed falls (rises). That is, the processing control unit 314 may control the air conditioner such that air of the air conditioner is directed toward the position where the sensor device 200 is disposed, for example. In this case, the processing control unit 314 may use first processing correspondence information obtained by previously associating a direction of the air of the air conditioner and various positions in an environment where the air conditioner is disposed, for example. The first processing correspondence information may be stored in the storage unit 322, for example.

Further, first processing correspondence information obtained by associating an arrangement position of each of the sensor devices 200 and a target temperature at the arrangement position may be previously prepared, and the air conditioner may be controlled such that a temperature measured by the sensor device 200 (the temperature sensor) comes closer to the target temperature associated with the arrangement position of the sensor device 200. The air conditioner may be controlled by a temperature and a direction of air to be blown out from the air conditioner.

A control signal is preferably a combination of a temperature measured by the sensor device 200 as the temperature sensor and a position of the sensor device 200 estimated by the estimation unit 312.

The air conditioner usually has the temperature sensor in its air conditioner body, and performs its own control based on a temperature measured by the temperature sensor in the air conditioner body (this is usually a temperature in the vicinity of the air conditioner body). The air conditioner is controlled by a temperature of temperature-adjusted air to be blown out from the air conditioner and a direction of the temperature-adjusted air. The air conditioner that has received a control signal from the information processing device 300 preferably performs control based on the control signal rather than control based on the temperature measured by the temperature sensor included in the air conditioner body. An air conditioner provided in a floor or a room of a building or a house is provided in many cases near or on a ceiling from the viewpoint of quickly spreading cold air/warm air over the floor or the like. Therefore, a considerable distance (in other words, a height difference) is present between a resident of the floor or the like and an installation position of the air conditioner. Cold air stays in the vicinity of the floor, and warm air stays in the vicinity of the ceiling of the floor. Therefore, there occurs a temperature difference that cannot be avoided between the temperature measured by the temperature sensor provided in the air conditioner and a sensible temperature of the resident. On the other hand, the sensor device 200 can be arranged in the vicinity of the resident of the floor or the like. Accordingly, a temperature close to the sensible temperature of the resident can be measured. Therefore, control based on the control signal is preferentially performed, thereby making it possible to quickly perform temperature control for the resident and making it possible to perform comfortable temperature control and perform efficient temperature control by the resident, also resulting in an increased energy saving effect.

A method for controlling the air conditioner based on the control signal is not particularly limited. However, when the control signal is a combination of a temperature measured by the sensor device 200 as the temperature sensor and a position of the sensor device 200 estimated by the estimation unit 312, the air conditioner may be controlled based on an average value of temperatures respectively measured by the plurality of sensor devices 200. When there is a significant difference between a temperature measured by the specific sensor device 200 and a temperature measured by the other sensor device 200, the air conditioner may be controlled to cancel the difference. Further, the information processing device 300 may generate a temperature distribution map of the floor or the like and the air conditioner may refer to the temperature distribution map to perform control such that a temperature distribution is as uniform as possible.

Although a method for providing a remote control of an air conditioner with a temperature sensor and controlling the air conditioner based on a temperature measured by the temperature sensor is also considered, the remote control does not usually include means for notifying its own position. Therefore, it is unclear what type of control is appropriate based on the temperature measured by the temperature sensor provided in the remote control. A configuration including a plurality of remote controls is not very practical. The air conditioner body may include means for measuring a surrounding temperature distribution based on a heat ray emitted by an object. However, a temperature in a location with a clear view from the air conditioner may be able to be indirectly measured. However, it is difficult to measure a temperature in a location hidden by facilities in the floor, for example.

As a specific example, the processing unit 400 may be a lighting device.

In this case, the sensor device 200 may include an illuminance sensor. The sensor device 200 measures a brightness under an environment as a physical quantity using the illuminance sensor.

The processing control unit 314 may control, when an illuminance measured by the illuminance sensor changes, the lighting device by transmitting to the lighting device a control signal for adjusting a brightness at a position where the illuminance sensor is disposed. The processing control unit 314 may control, when the illuminance measured by the illuminance sensor falls (rises), the lighting device to brighten (turn on) (darken (turn off)) a lighting device near a position where the sensor that has measured the illuminance is disposed. In this case, the processing control unit 314 may use second processing correspondence information obtained by previously associating a lighting device and various positions in an environment where the lighting device is disposed, for example. The second processing correspondence information may be stored in the storage unit 322, for example.

For the lighting device, second processing correspondence information obtained by associating an arrangement position of each of the sensor devices 200 and a target illuminance at the arrangement position may also be previously prepared, and the lighting device may be controlled such that an illuminance measured by the sensor device 200 (the temperature sensor) comes closer to the target illuminance associated with the arrangement position of the sensor device 200, like for the air conditioner. Details of the control of the lighting device are similar to the details of the control of the air conditioner, and hence description thereof is not repeated.

As a result, the sensor device 200 can be arranged in the vicinity of a resident of a floor or the like, like the temperature sensor. Accordingly, an illuminance close to a sensible illuminance of the resident can be measured. Therefore, control based on a control signal is preferentially performed, thereby making it possible to quickly perform illuminance control for the resident and making it possible to perform comfortable illuminance control and perform efficient illuminance control by the resident, also resulting in an increased energy saving effect. That is, based on an illuminance at a position where the illuminance sensor is disposed, an illuminance in an environment near the position where the illuminance sensor is disposed can be adjusted to be finer and appropriate for a person who is located in the vicinity of the illuminance sensor.

The sensor device 200 may include a human sensor of an infrared type or the like. If the sensor device 200 is the human sensor of the infrared type, for example, the sensor device 200 measures an amount of infrared rays around the sensor device 200 as a physical quantity using the human sensor.

The air conditioner and the lighting device can be controlled based on a measurement result of the human sensor. As a result, based on a sensing result of infrared rays emitted by a person at a position where the human sensor is disposed, a temperature and an illuminance in an environment near the position where the human sensor is disposed can be adjusted to be finer and appropriate for a person who is located in the vicinity of the human sensor.

Further, the sensor device 200 may have a button that can be operated by a resident in the vicinity of the sensor device 200. As an example, when the resident in the vicinity of the sensor device 200 desires to perform processing by the processing unit 400, such as temperature control and illuminance control, regardless of states such as a numerical value of a physical quantity measured by the sensor device 200, the processing control unit 314 instructs the processing unit 400 to perform control in the vicinity of the sensor device 200 the button of which has been pressed. As an example, the air conditioner and the lighting device are instructed to preferentially perform temperature control and illuminance control, for example, in the vicinity of the sensor device 200 the button of which has been pressed. Examples of a variation to be preferentially performed include such control that a temperature and an illuminance in the vicinity of the sensor device 200 the button of which has been pressed quickly reach a target temperature and the like and such control that a temperature and an illuminance in the vicinity of the sensor device 200 the button of which has been pressed are not preferentially performed (temperature control, illuminance control, and the like are not so desired).

Although the temperature sensor and the illuminance sensor have been described as examples of the sensor device 200, a control target may be a humidity sensor, a CO₂ sensor, or a VCO (volatile organic compound) sensor.

The reception unit 315 may receive a predetermined characteristic measured by each of the plurality of directional couplers 103. That is, the reception unit 315 may receive a predetermined characteristic for the directional coupler 103 disposed in each of the plurality of transmitters 100 via the communication unit 321, for example. The predetermined characteristic may be an insertion loss or the like based on an input wave and a reflected wave, for example.

The transmission control unit 316 may perform control, when there occurs such a change that the predetermined characteristic received by the reception unit 315 deteriorates, such that transmission power of the transmitter 100 to which the directional coupler 103 the characteristic of which has changed is connected is weaker than that when the characteristic does not change. The transmission control unit 316 can estimate, when there occurs such a change that the insertion loss or the like of the directional coupler 103 relatively deteriorates, for example, that there is an object relatively near the antenna 104. In this case, the transmission control unit 316 may control the transmitter 100 to make power transmitted from the transmitter 100 relatively weak.

In this case, when a person has been present near the antenna 104 and a person has passed near the antenna 104, for example, a predetermined characteristic (e.g., an insertion loss) of the directional coupler 103 may temporarily deteriorate. Specific examples of a case where a person is present near the antenna 104 include a case where a person is working near the antenna 104 and a case where a plurality of persons are talking near the antenna 104. Accordingly, the transmission control unit 316 may control, when there occurs such a change that the predetermined characteristic of the directional coupler 103 deteriorates, the transmitter 100 to weaken transmission power for a predetermined time period by estimating that a person is present nearby. The predetermined time period may be various time periods such as one minute, three minutes, five minutes, eight minutes, and ten minutes. The transmission control unit 316 may perform control to return the transmission power to its original transmission power after an elapse of the predetermined time period.

The transmission control unit 316 may perform control, when a state where the predetermined characteristic is poor is also maintained after the elapse of the predetermined time period, to return the transmission power to its original transmission power by estimating that an object is present nearby.

The output control unit 317 may control an output unit to output a position of the sensor device 200 estimated by the estimation unit 312, for example. Examples of the output unit include the communication unit 321, the storage unit 322, and the display unit 323.

In other words, the output control unit 317 may control the communication unit 321 to transmit information about a position of the sensor device 200 estimated by the estimation unit 312 to outside (an external device), for example. In this case, examples of the external device may include a server (not illustrated) and a user terminal (not illustrated) used by a user who uses the information processing device 300. Examples of the user terminal may include a desk top, a lap top, a tablet, and a smartphone.

The output control unit 317 may control the storage unit 322 to store the information about the position of the sensor device 200 estimated by the estimation unit 312, for example.

The output control unit 317 may control the display unit 323 to display the position of the sensor device 200 estimated by the estimation unit 312, for example.

The output control unit 317 may control the output unit to output various types of information respectively generated by the units in the information processing device 300 regardless of the position of the sensor device 200 estimated by the estimation unit 312, for example.

### [Information Processing Method]

Then, an information processing method according to the one embodiment will be described.

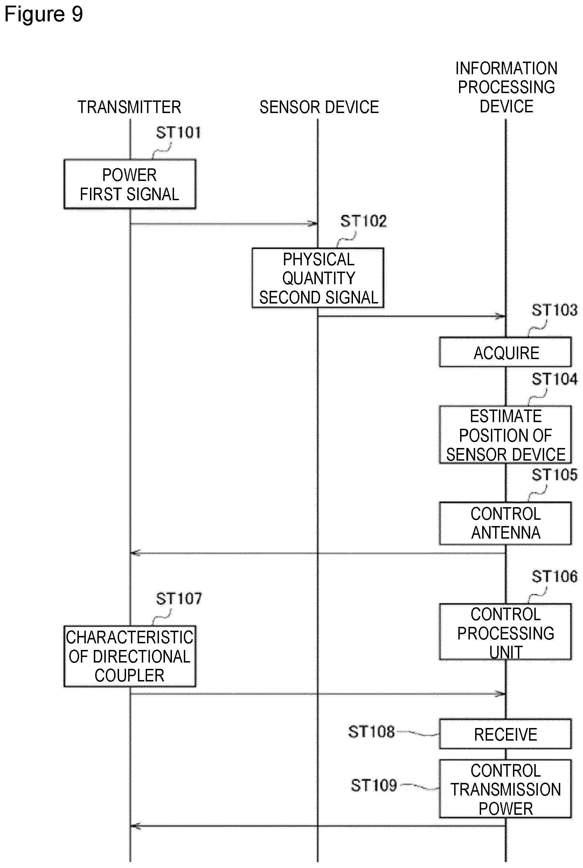

Figure 9 is a flowchart for illustrating the information processing method according to the one embodiment.

In step ST101, the transmitter 100 wirelessly transmits to the sensor device 200 power and transmits a first signal. The plurality of sensor devices 200 may respectively transmit different first signals, for example.

In step ST102, the sensor device 200 measures a physical quantity and transmits the physical quantity to the information processing device 300 when receiving the power transmitted in step ST101, and transmits a second signal corresponding to the first signal transmitted in step ST101 to the information processing device 300.

In step ST103, the information processing device 300 acquires the physical quantity and the second signal that are transmitted in step ST102.

In step ST104, the information processing device 300 specifies the transmitter 100 that transmits the first signal corresponding to the second signal acquired in step ST103 based on first correspondence information stored in the storage unit 322 and estimates that the sensor device 200 that transmits the second signal in step ST102 is present near the transmitter 100.

The information processing device 300 may estimate, when the one sensor device 200 receives a plurality of first signals, respective distances between the plurality of transmitters 100 and the sensor device 200. The estimation unit 312 can estimate a position of the sensor device 200 by triangulation based on the plurality of distances between the plurality of transmitters 100 and the sensor device 200 and respective positions of the transmitters 100 recorded in the first correspondence information, for example.

In step ST105, the information processing device 300 performs control such that directivity of the antenna 104 in the transmitter 100 is oriented toward the position of the sensor device 200 estimated in step ST105. As an example, the information processing device 300 may control, based on the position of the sensor device 200 estimated in step ST105, the antenna 104 in the transmitter 100 closest to the sensor device 200.

In step ST106, the information processing device 300 may control, based on the physical quantity measured by the sensor device 200 the position of which is estimated in step ST105, the processing unit 400 to perform predetermined processing for a position where the sensor device 200 is disposed. Examples of the physical quantity may include a temperature and an illuminance. Examples of the processing unit 400 may include an air conditioner and a lighting device.

In other words, the information processing device 300 may control, when a temperature measured by the sensor device 200 changes, the air conditioner to adjust a temperature at a position where the temperature sensor is disposed.

The information processing device 300 may control, when an illuminance measured by the sensor device 200 changes, the lighting device to adjust a brightness at a position where the illuminance sensor is disposed.

In step ST107, the transmitter 100 transmits a predetermined characteristic acquired by the directional coupler 103 to the information processing device 300. Examples of the predetermined characteristic may include an insertion loss.

In step ST108, the information processing device 300 receives the predetermined characteristic acquired by the directional coupler 103 in step ST107.

In step ST109, the information processing device 300 perform control, when there occurs such a change that the predetermined characteristic received in step ST108 deteriorates, to make transmission power of the transmitter 100 to which the directional coupler 103 the characteristic of which has changed is connected weaker than that when the characteristic does not change. In this case, the information processing device 300 may control the transmitter 100 to weaken the transmission power for a predetermined time period.

### [Effect of One Embodiment]

As described above, with the information processing system 1 according to the one embodiment, a position of the sensor device 200 as a target of wireless transmission can be estimated and preferably specified.

In the information processing system 1 according to the one embodiment, there are provided a plurality of transmitters 100 and a plurality of sensor devices 200. The provision of the plurality of sensor devices 200 makes it possible to arrange, when a large number of persons reside in a space, where the sensor devices 200 are provided, such as an office or a residence in a building, the sensor devices 200 in the vicinity of the persons. Power required to measure a physical quantity by each of the sensor devices 200 themselves is not large power. Therefore, the power for measuring the physical quantity by the sensor device 200 can be sufficiently supplied by wireless power transmission from each of the transmitters 100. As described above, the air conditioner, the lighting device, or the like can be controlled based on the physical quantity measured by the sensor device 200. That is, the air conditioner or the like can be controlled such that a space where a person who resides in an office or the like is comfortable can be implemented by measuring a physical quantity in the vicinity of the person using the sensor device 200.

Temperature control of the air conditioner or illuminance control of the lighting device is generally performed based on a temperature or the like in a location where the air conditioner or the like is installed. However, there occurs a predetermined difference between the temperature in the location where the air conditioner or the like is installed and a temperature in a location where a person resides. This is mainly caused by a problem of a distance and further a problem of a height difference. Conventional air conditioner control can be said to be temperature control for optimizing a location where no person is present.

With the information processing system 1 according to the one embodiment, the sensor device 200 can be arranged in the vicinity of a person, thereby making it possible to finely and reliably perform temperature control or the like to improve comfortability for a person who resides in a space where the sensor device 200 is provided.

### [Modification]

In the above-described one embodiment, the information processing device 300 acquires from the plurality of sensor devices 200, respectively, physical quantities measured by the plurality of sensor devices 200 and second signals corresponding to first signals transmitted from the plurality of transmitters 100. At this time, each of the plurality of transmitters 100 may acquire (receive) signals respectively representing physical quantities measured by the plurality of sensor devices 200 and second signals respectively corresponding to first signals transmitted from the transmitter 100, and transmit to the information processing device 300 the signals representing the physical quantities and the second signals that are acquired. Each of the transmitters 100 includes the directional coupler 103, as described above. Accordingly, a signal inputted from the amplifier circuit 102 may be transmitted to each of the sensor devices 200 from the antenna 104 as a transmission power signal. On the other hand, the signal representing the physical quantity and the second signal transmitted from the sensor device 200 may be received by the antenna 104 and captured as a reception signal.

Respective frequency bands and protocols of the power transmission signal and the first signal from the transmitter 100 to the sensor device 200 and respective frequency bands and protocols of the signal representing the physical quantity and the second signal from the sensor device 200 to the transmitter 100 and/or the information processing device 300 can be appropriately selected from those well known. Although one example is described below, frequency bands and protocols that can be adopted in the information processing systems 1 disclosed in the one embodiment and the modification are not limited to those as illustrated.

First, a power transmission signal transmitted from a transmitter 100 may be a continuous wave (CW) having predetermined power as an example. A frequency band of the power transmission signal is a band of 900 MHz, for example, in consideration of a distance between the transmitter 100 and a sensor device 200. In a frequency band higher than the illustrated frequency band, the sensor device 200 may be unable to supply predetermined operable power unless the distance between the transmitter 100 and the sensor device 200 is shortened. Accordingly, an appropriate frequency band can be determined by considering a practical range (considering that the distance between the transmitter 100 and the sensor device is several meters as an example).

In this case, a law or the like of a country where an information processing system 1 is installed may impose a limitation that the power transmission signal having the predetermined power is intermittently transmitted. As an example, when the power transmission signal from the transmitter 100 corresponds to a regulation of a radio station defined in Japanese Radio Law (with or without a license), a predetermined break period may be required to be provided for the power transmission signal based on Radio Law. In this case, the power transmission signal cannot be said as a continuous wave when considered on a certain time axis. In the information processing system 1 according to the present embodiment, the intermittent power transmission signal may also serve as a first signal. Note that it is important to provide a break period. The break period may be very short. Accordingly, the power transmission signal transmitted from the transmitter 100 can be regarded as a substantially consecutive continuous wave.

If the power transmission signal is considered to be a first signal, the first signal may not differ among a plurality of transmitters 100. That is, it is a design matter and it is not essential in the information processing system 1 according to the present embodiment whether or not the break period is synchronized among the plurality of transmitters 100. Naturally, it is also possible to adopt a configuration in which the break period is intentionally made different among the plurality of transmitters 100 and each of the transmitters 100 is identified by the sensor device 200 depending on the difference in the break period on a time axis.

Respective frequency bands of a signal representing a physical quantity and a second signal that are transmitted from the sensor device 200 to the transmitter 100 and/or an information processing device 300 may be determined by respective transmission protocols of the signals. If the protocols of the signals are determined by a wireless LAN (IEEE802.11) standard as an example, the frequency bands of the signals are each 2.4 GHz. Similarly, if the protocols of the signals are determined by a Bluetooth (registered trademark) standard, the frequency bands of the signals are each 2.4 GHz.
Further, if the protocols of the signals are each a UWB (ultra wide band), the frequency bands are each a specific frequency band determined by each country in a microwave band and a submillimeter wave band. Further, if the protocols of the signals are each an RFID (radio frequency identification), an appropriate frequency band is selected by a distance and a communication system between the transmitter 100 and (a sensor communication unit 210 in) the sensor device 200 as an RF tag.

Thus, to the respective protocols of the signal representing the physical quantity and the second signal that are transmitted from the sensor device 200 to the transmitter 100 and/or the information processing device 300, a protocol capable of transmitting and receiving data, particularly a known protocol capable of communication in a relatively short distance (e.g., several meters) are favorably applied. Examples include a wireless LAN, Bluetooth, a UWB, and an RFID.

Further, when the signals are received by the transmitter 100, communication between the transmitter 100 and the information processing device 300 is also required. The transmitter 100 and the information processing device 300 may be connected to each other by a wired-scheme network, or may be connected to each other by various types of wireless schemes used in communication between the transmitter 100 and the sensor device 200. In the wireless scheme, each of the transmitter 100 and the information processing device 300 preferably includes a wireless transmission/receiving unit.

A timing of transmitting the power transmission signal from the transmitter 100 and a timing of transmitting the signal representing the physical quantity from the sensor device 200 may be simultaneous with each other. That is, the sensor device 200 may transmit the signal representing the physical quantity at the same time that the transmitter 100 transmits the power transmission signal. Naturally, a timing of transmitting the power transmission signal and the first signal from the transmitter 100 and a timing of transmitting the signal representing the physical quantity and the second signal from the sensor device 200 may be simultaneous with each other.

When the RFID, particularly an RFID tag called a passive tag is used, a signal transmitted from the RFID uses a reflected wave (back scatter) of the transmission signal from an RFID reader/writer. Therefore, it is difficult to simultaneously transmit the power transmission signal from the transmitter 100 and the signal representing the physical quantity or the like from the sensor device 200 in the present embodiment. Further, in communication using the back scatter, a signal is transmitted and received in the same frequency band, and a technical difficulty of simultaneously transmitting and receiving the signal is high. In this respect, in the information processing system 1 according to the present embodiment, a frequency band of the power transmission signal from the transmitter 100 and a frequency band of the signal or the like representing the physical quantity from the sensor device 200 can be made different from each other. Accordingly, a technical difficulty of simultaneously transmitting and receiving the signals is low.

As described above, a storage unit 322 in the information processing device 300 stores (second) correspondence information. The second correspondence information is information obtained by associating the distance between the transmitter 100 and the sensor device 200 and the second signal corresponding to the first signal. Details of the second correspondence information are determined depending on how an estimation unit 312 in the information processing device 300 detects the distance between the transmitter 100 and the sensor device 200.

Examples of a method for detecting the distance between the transmitter 100 and the sensor device 200 include a method based on a radio wave intensity (received signal strength indication) of a radio wave from the sensor device 200, a method based on an angle of arrival of a radio wave from the sensor device 200, and a method based on an arrival time period of a radio wave from the sensor device 200.

The method based on a radio wave intensity of a radio wave is as follows. A radio wave intensity of a radio wave transmitted by the sensor device 200 is given as second correspondence information. The estimation unit 312 detects the radio wave intensity of the radio wave received by the transmitter 100 and/or the information processing device 300 from the sensor device 200. From a Friis transmission formula, it is known that the radio wave from the sensor device 200 is attenuated in reverse proportion to a square or squares of a distance or distances to the transmitter 100 and/or the information processing device 300. Accordingly, the estimation unit 312 can find the distance or distances from the sensor device 200 to the transmitter 100 and/or the information processing device 300 using the Friis transmission formula. Such a method is frequency used in a wireless LAN (IEEE802.11).

Then, the method based on an angle of arrival of a radio wave is as follows. If a configuration in which a radio wave from the sensor device 200 is received by a plurality of antennas is adopted by the transmitter 100 and/or the information processing device 300, the estimation unit 312 can find an angle of arrival of the radio wave from the sensor device 200 based on a difference among respective reception time periods by the antennas. The angle of arrival of the radio wave from the same sensor device 200 is found by a plurality of transmitters 100 and/or the information processing device 300, whereby the estimation unit 312 can find distances from the sensor device 200 to the transmitters 100 and/or the information processing device 300. Such a method is defined as an AoA (angle of arrival) in Bluetooth 5.0. If the sensor device 200 includes a plurality of antennas, an AoD (angle of departure) can also be used. At this time, second correspondence information is a table representing a relationship between a difference in the reception time period of the radio wave and the angle of arrival.

Further, the method based on an arrival time period of a radio wave is as follows. A timing of transmitting a radio wave transmitted from the sensor device 200 has a predetermined period (e.g., based on a clock), and the transmitter 100 and/or the information processing device 300 have/has a clock synchronized with the clock. The estimation unit 312 finds, from a timing at which the transmitter 100 and/or the information processing device 300 have/has received the radio wave from the sensor device 200, a difference between an arrival time period of the radio wave from the sensor device 200, i.e., a time period during which the radio wave has been transmitted from the sensor device 200 and a time period during which the radio wave has been received by the transmitter 100 and/or the information processing device 300. The estimation unit 312 can find a distance or distances from the sensor device 200 to the transmitter 100 and/or the information processing device 300 based on the difference between the time periods. Such a method is used when the UWB is adopted as a protocol of the radio wave. In this case, the second correspondence information is a table representing a relationship between the arrival time period of the radio wave and the distance or distances.

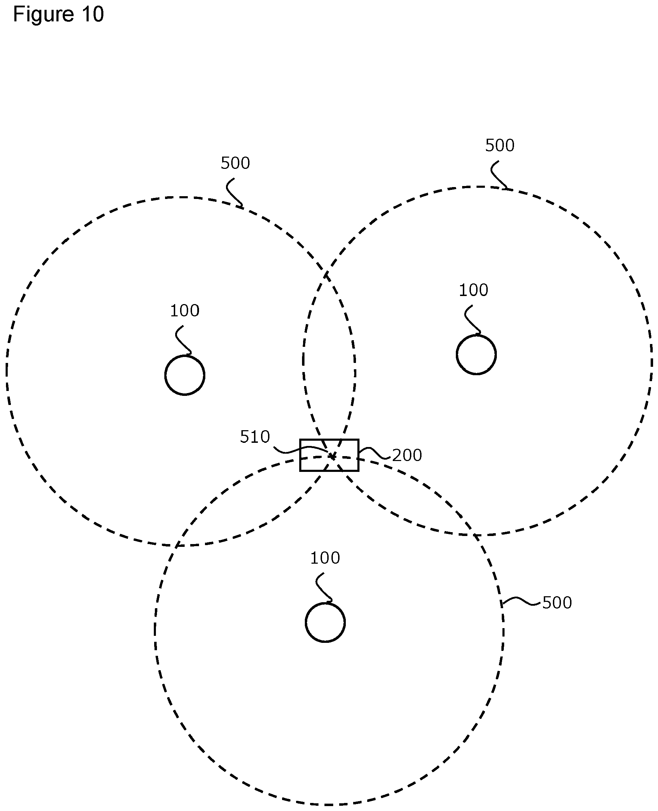

With the above-described methods, the estimation unit 312 can calculate the distance or distances between the sensor device 200 that has transmitted the radio wave and the transmitter 100 and/or the information processing device 300, and can specify, based on the calculated distance or distances, the transmitter 100 having the distance closest to the sensor device 200 that has transmitted the second signal. The estimation unit 312 estimates that the sensor device 200 that transmits the second signal is present near the specified transmitter 100. In addition, the estimation unit 312 can find a position of the sensor device 200 by finding the distance or distances between the sensor device 200 and the transmitter 100 and/or the information processing device 300, calculated using the above-described method, for the same sensor device 200 and the plurality of transmitters 100 and/or the information processing device 300. A method for finding the position of the sensor device 200 will be described below with reference to Figures 10 to 12.

Examples of the method for finding the position of the sensor device 200 include a method using so-called triangulation, a method called check-in, and a method using a finger-print.

Although the method using triangulation has already been described, the method will be described in detail again with reference to Figure 10. The triangulation presupposes that a distance or distances between at least two transmitters 100 and/or the information processing device 300 and the sensor device 200, preferably a distance or distances between three or more transmitters 100 and/or the information processing devices 300 and the sensor device 200 have been found. In an example illustrated in Figure 10, the respective distances between the three transmitters 100 and the sensor device 200 are found by the estimation unit 312. The distance is represented by a circle 500. The distance may be a distance between the information processing device 300 and the sensor device 200, although illustrated as the distance between the transmitter 100 and the sensor device 200 in Figure 10. It is estimated that the sensor device 200 is present at an intersection 510 of the three circles 500 from a relationship of the respective distances between the transmitters 100 and the sensor device 200. Thus, the estimation unit 312 can find the distance or distances between the transmitter 100 and/or the information processing device 300 and the sensor device 200.

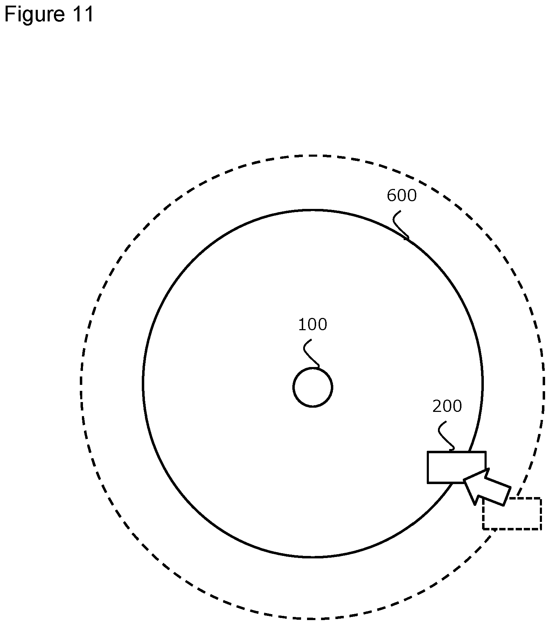

The method called check-in will be described with reference to Figure 11. In the check-in, a value of a radio wave intensity corresponding to a predetermined distance has been previously determined as a threshold value. The estimation unit 312 monitors a radio wave intensity of a radio wave transmitted from the sensor device 200 for the specific transmitter 100, and determines, when the radio wave intensity is the previously determined threshold value or more, that a distance between the specific transmitter 100 and the sensor device 200 is a distance corresponding to the radio wave intensity. In Figure 11, the distance corresponding to the threshold value is represented by a circle 600. When similar determination is performed for a plurality of transmitters 100, the estimation unit 312 can find a distance or distances between the transmitter 100 and/or the information processing device 300 and the sensor device 200. The distance may be a distance between the information processing device 300 and the sensor device 200, although also illustrated as a distance between the transmitter 100 and the sensor device 200 in Figure 11.

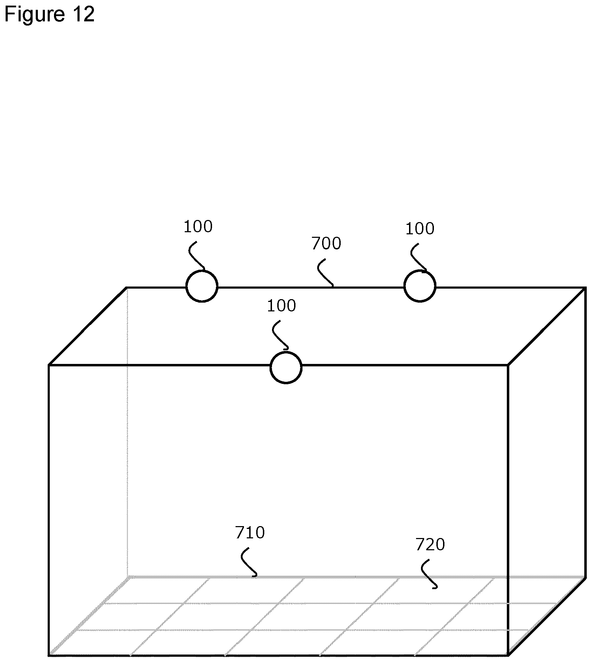

The method called a finger-print will be described with reference to Figure 12. For example, a plurality of (three in Figure 12) transmitters 100 are installed near a roof of a room 700 or the like where a sensor device 200 is arranged, as illustrated in Figure 12. The sensor device 200 is arranged on a plane 710 near a floor surface of the room 700. When the plane 710 is divided into a plurality of predetermined compartments 720, and the sensor device 200 is arranged in each of the compartments 720, a radio wave intensity of a radio wave received by each of the transmitters 100 from the sensor device 200 has been previously found. In this case, the radio wave intensity in each of the compartments 720 may be a measured value, or may be found by theoretical calculation (calculation can be performed if a distance between the transmitter 100 and the sensor device 200 is known). The estimation unit 312 detects radio wave intensities of the radio wave from the sensor device 200, which have been respectively detected by the plurality of transmitters 100, finds, from a set of values of the radio wave intensities respectively assigned to the compartments 720, the compartment 720 assigned the radio wave intensity that matches or is closest to the sensor device 200, and estimates that the sensor device 200 is positioned in the compartment 720. The distance may be a distance between the information processing device 300 and the sensor device 200, although illustrated as a distance between the transmitter 100 and the sensor device 200 in Figure 12.

Although operations of the estimation unit 312 have been variously described above, the estimation unit 312 may be provided in the transmitter 100, or may be provided in respective transmission/receiving units provided in the transmitter 100 and the information processing device 300 in the present embodiment. Thus, in the information processing system 1 according to the present embodiment, the transmitter 100 and the information processing device 300 illustrated in Figure 1, for example, may be collectively referred to as an information processing device.

Therefore, a similar effect to that of the information processing system 1 according to the one embodiment can also be obtained by the information processing system 1 according to the modification.

### [Notes]

Each of units in the above-described information processing device 300 may be implemented as a function of an arithmetic processing unit or the like in a computer. That is, the acquisition unit 311, the estimation unit 312, the antenna control unit 313, the processing control unit 314, the reception unit 315, the transmission control unit 316, and the output control unit 317 (the control unit 310) in the information processing device 300 may be respectively implemented by an acquisition function, an estimation function, an antenna control function, a processing control function, a reception function, a transmission control function, and an output control function (control function) of the arithmetic processing unit or the like in the computer.

An information processing program enables the computer to implement the above-described functions. The information processing program may be recorded on a computer readable non-transitory recording medium such as a memory, a solid-state drive, a hard disk drive, or an optical disk.

Each of the units in the information processing device 300 may be implemented by the arithmetic processing unit or the like in the computer, as described above. The arithmetic processing unit or the like includes an integrated circuit, for example. Accordingly, the units in the information processing device 300 may be respectively implemented as circuits constituting the arithmetic processing unit or the like. That is, the acquisition unit 311, the estimation unit 312, the antenna control unit 313, the processing control unit 314, the reception unit 315, the transmission control unit 316, and the output control unit 317 (the control unit 310) in the information processing device 300 may be respectively implemented as an acquisition circuit, an estimation circuit, an antenna control circuit, a processing control circuit, a reception circuit, a transmission control circuit, and an output control circuit (control circuit) constituting the arithmetic processing unit or the like in the computer.

The communication unit 321, the storage unit 322, and the display unit 323 (the output unit) in the information processing device 300 may be respectively implemented as a communication function, a storage function, and a display function (an output function) each including a function of an arithmetic processing unit or the like, for example. The communication unit 321, the storage unit 322, and the display unit 323 (the output unit) in the information processing device 300 may be implemented as a communication circuit, a storage circuit, and a display circuit (an output circuit) by each including an integrated circuit, for example. The communication unit 321, the storage unit 322, and the display unit 323 (the output unit) in the information processing device 300 may be respectively implemented as a communication device, a storage device, and a display device (an output device) by each including a plurality of devices, for example.

In the information processing system 1, it is possible to combine one or any number of the above-described plurality of units.

Although a term "information" is used in the present disclosure, the term "information" can be referred to as "data", and the term "data" can be referred to as "information".

### [Aspect and Effect of Present Embodiment]

Then, aspects of the present embodiment and an effect produced by each of the aspects will be described. The present embodiment is not limited to each of the aspects described below, but may be implemented by appropriately combining the above-described units. The effect described below is an example, and the effect produced by each of the aspects is not limited to that described below.

### (Aspect 1)

An information processing system according to an aspect includes one or more transmitters that wirelessly transmit power, wherein each of the transmitters is capable of transmitting a different first signal, a plurality of sensor devices, respectively arranged at different positions, being capable of measuring predetermined physical quantity, and having receivers which are capable of receiving a power transmitted from the transmitter and receiving the first signal, and an information processing device being capable of acquiring, from the plurality of sensor devices, the physical quantity measured by each of the plurality of sensor devices and a second signal corresponding to the first signal transmitted from each of the transmitters, wherein the information processing device comprises a storage unit storing a first correspondence information associating a position where the transmitter is arranged, the first signal transmitted by the transmitter, and the second signal corresponding to the first signal, and an estimation unit estimating that the sensor device, transmitting the second signal, is positioned near the transmitter by identifying, among the transmitters, the transmitter transmitting the first signal corresponding to the second signal transmitted from the sensor device based on the first correspondence information stored in the storage unit.

As a result, the information processing system can estimate the position of the sensor device. As an example, the information processing system can specify the position of the sensor device by performing triangulation using the first signal transmitted from each of the plurality of transmitters.

### (Aspect 2)

An information processing system according to an aspect includes one or more transmitters that wirelessly transmit power, wherein the transmitter is capable of transmitting a first signal, a plurality of sensor devices, respectively arranged at different positions, being capable of measuring predetermined physical quantity, and having receivers which are capable of receiving a power transmitted from the transmitter and receiving the first signal, and an information processing device being capable of acquiring, from the plurality of sensor devices, a signal representing the physical quantity measured by each of the plurality of sensor devices and a second signal corresponding to the first signal transmitted from each of the transmitters, wherein the information processing device comprises a storage unit storing a second correspondence information associating a distance between the transmitter and the sensor device, and the second signal corresponding to the first signal, and an estimation unit estimating that the sensor device, transmitting the second signal, is positioned near the transmitter by identifying, among the transmitters, the transmitter having the distance closest to the sensor device that transmits the second signal based on the second correspondence information stored in the storage unit.

As a result, the information processing system can estimate the distance between the sensor device and the information processing device. As an example, the information processing system can specify the position of the sensor device by performing triangulation using the second signal transmitted from each of the plurality of transmitters.

### (Aspect 3)

In the information processing system according to the one aspect, the information processing device may include an antenna control unit performing control such that directivity of an antenna of the transmitter is oriented toward a position of the sensor device estimated by the estimation unit.

As a result, the information processing system can efficiently transmit the power and the first signal from the transmitter to the sensor device.

### (Aspect 4)

In the information processing system according to the one aspect, the antenna control unit may control the antenna of the transmitter closest to the sensor device based on the position of the sensor device estimated by the estimation unit.

As a result, the information processing system can efficiently transmit the power and the first signal from the transmitter to the sensor device.

### (Aspect 5)

In the information processing system according to the one aspect, the information processing device may include a processing control unit controlling a processing unit to perform predetermined processing for a position where the sensor device is arranged based on the physical quantity measured by the sensor device, the position of which is estimated by the estimation unit.

As a result, the information processing system can perform, using a physical quantity under an environment where a sensor device is disposed, processing for an environment near the position where the sensor device is disposed.

### (Aspect 6)

In the information processing system according to the one aspect, the processing unit may be an air conditioner, the sensor device may include a temperature sensor, and the processing control unit may control, in case where a temperature measured by the temperature sensor changes, the air conditioner to adjust a temperature at a position where the temperature sensor is arranged.

As a result, the information processing system can adjust, based on the temperature at the position where the sensor device is disposed, a temperature in an environment near the position where the sensor device is disposed.

### (Aspect 7)

In the information processing system according to the one aspect, the processing control unit may have a first processing correspondence information associating an arrangement position of the sensor device and a target temperature at the arrangement position, and controls the air conditioner such that the temperature measured by the temperature sensor comes closer to the target temperature associated with the arrangement position of the sensor device.

As a result, the information processing system can adjust, based on the temperature at the position where the sensor device is disposed, a temperature in an environment near the position where the sensor device is disposed to be finer and comfortable for a person who is located in the vicinity of the sensor device.

### (Aspect 8)

In the information processing system according to the one aspect, the processing unit may be a lighting device, the sensor device may include an illuminance sensor, and the processing control unit may control, in case where an illuminance measured by the illuminance sensor changes, the lighting device to adjust a brightness at a position where the illuminance sensor is arranged.

As a result, the information processing system can adjust, based on the illuminance at the position where the sensor device is disposed, an illuminance in an environment near the position where the sensor device is disposed.

### (Aspect 9)

In the information processing system according to the one aspect, the processing control unit may have a second processing correspondence information associating an arrangement position of the sensor device and a target illuminance at the arrangement position, and controls the lighting device such that the illuminance measured by the illuminance sensor comes closer to the target illuminance associated with the arrangement position of the sensor device.

As a result, the information processing system can adjust, based on the illuminance at the position where the sensor device is disposed, an illuminance in an environment near the position where the sensor device is disposed to be finer and appropriate for a person who is located in the vicinity of the sensor device.

### (Aspect 10)

In the information processing system according to the one aspect, each of the transmitters may include a directional coupler for a signal of power transmitted from an antenna of the transmitter, and the information processing device may include a reception unit receiving a predetermined characteristic measured by each of the directional couplers, and a transmission control unit performing control, in case where there occurs such a change that the predetermined characteristic received by the reception unit deteriorates, to make transmission power of the transmitter, to which the directional coupler the characteristic of which has changed is connected, weaker than that the characteristic does not change.

As a result, the information processing system can weaken, when a person is present near a transmitter, for example, the power transmitted from the transmitter. That is, the information processing system can prevent the person from being adversely affected by transmission power, for example.

### (Aspect 11)

In the information processing system according to the one aspect, the transmission control unit may control the transmitter to weaken the transmission power for a predetermined time period.

As a result, the information processing system can temporarily weaken, when a person is present near a transmitter, for example, power transmitted from the transmitter.

### (Aspect 12)

In the information processing system according to the one aspect, a plurality of transmitters are provided, the second correspondence information stored in the storage unit is an information associating the distance between the transmitter and the sensor device and signal intensity of the second signal corresponding to the first signal, and the estimation unit acquires signal intensities of a plurality of the second signals received by the plurality of transmitters, and identifies, among the plurality of transmitters, the transmitter having the distance closest to the sensor device that transmits the second signal based on the plurality of signal intensities and the second correspondence information.

As a result, the information processing system can more accurately specify the transmitter having the distance closest to the sensor device.

### (Aspect 13)

In the information processing system according to the one aspect, the three or more transmitters may be provided, and the estimation unit may acquire signal intensities of the plurality of second signals received by the at least three or more transmitters, identify, among the plurality of transmitters, the transmitter having the distance closest to the sensor device that transmits the second signal based on the plurality of signal intensities and the second correspondence information, and identify a position where the sensor device having the distance closest to the transmitter is arranged.

As a result, the information processing system can specify the position of the sensor device using the second signal transmitted from the sensor device.

### (Aspect 14)

In the information processing system according to the one aspect, the estimation unit may acquire signal intensities of the second signals received by the transmitters, and identify, among the transmitters, the transmitter having the distance closest to the sensor device that transmits the second signal based on whether or not the signal intensity is a predetermined threshold value or more based on the signal intensities and the second correspondence information.

As a result, the information processing system can more accurately specify the transmitter having the distance closest to the sensor device.

### (Aspect 15)

In the information processing system according to the one aspect, the three or more transmitters may be provided, the second correspondence information stored in the storage unit may be an information associating a position where the sensor device is arranged and signal intensity of the second signal corresponding to the first signal, and the estimation unit may acquire signal intensities of the plurality of second signals received by the at least three or more transmitters, identify, among the plurality of transmitters, the transmitter having the distance closest to the sensor device that transmits the second signal based on the plurality of signal intensities and the second correspondence information, and identify a position where the sensor device having the distance closest to the transmitter is arranged.

As a result, the information processing system can specify the position of the sensor device using the signal intensity of the second signal transmitted from the sensor device.

### (Aspect 16)

In the information processing system according to the one aspect, the plurality of transmitters may be provided, and the estimation unit may acquire angles of arrival of the plurality of second signals received by the plurality of transmitters, and identify, among the plurality of transmitters, the transmitter the transmitter having the distance closest to the sensor device that transmits the second signal based on the plurality of angles of arrival and the second correspondence information.

As a result, the information processing system can more accurately specify the transmitter having the distance closest to the sensor device using the angle of arrival of the second signal transmitted from the sensor device.

### (Aspect 17)

In the information processing system according to the one aspect, the estimation unit may be provided in the transmitters.

As a result, the information processing system can simplify a configuration of the information processing device.

### (Aspect 18)

In the information processing system according to the one aspect, a power transmission signal transmitted from the transmitter may be the first signal.

As a result, the information processing system can simplify a configuration of the transmitter.

### (Aspect 19)

In the information processing system according to the one aspect, the power transmission signal may become the first signal on a condition that the power transmission signal may be substantially consecutive wireless frequency signals having predetermined power, and the wireless frequency signals are intermittently transmitted from the transmitter at a predetermined period.

As a result, the information processing system can stably perform power supply to the sensor device, and can widen a spacing between the transmitter and the sensor device.

### (Aspect 20)

In the information processing system according to the one aspect, a frequency band of the first signal and a frequency band of the second signal may differ from each other.

As a result, a technical difficulty of simultaneously transmitting and receiving the first signal and the second signal can be made low.

### (Aspect 21)

In the information processing system according to the one aspect, the sensor device may transmit the physical quantity and the second signal simultaneously with the power transmission signal transmitted from the transmitter.

As a result, each of the transmitter and the sensor device can transmit the power transmission signal, the physical quantity, and the second signal at a timing determined by itself.

### (Aspect 22)

An information processing device according to one aspect includes a storage unit storing a first correspondence information associating a position where a transmitter is arranged, wherein the transmitter is one or more transmitters that wirelessly transmit power and each of the transmitters is capable of transmitting a different first signal, the first signal transmitted by the transmitter, and a second signal corresponding to the first signal, an acquisition unit acquiring measured physical quantity and the second signal corresponding to the first signal respectively transmitted from the transmitter, from a plurality of sensor devices, wherein the plurality of sensor devices, having receivers capable of receiving the power transmitted by the transmitter and receiving the first signal respectively arranged at different positions, and being capable of measuring predetermined physical quantity, and an estimation unit estimating that the sensor device, transmitting the second signal, is positioned near the transmitter by identifying, among the transmitters, the transmitter transmitting the first signal corresponding to the second signal acquired by the acquisition unit and transmitted from the sensor device based on the first correspondence information stored in the storage unit.

As a result, the information processing device can produce a similar effect to that of the above-described information processing system according to the one aspect.

### (Aspect 23)

An information processing method according to one aspect causes a computer including a storage unit storing a first correspondence information associating position where a transmitter is arranged, wherein the transmitter is one or more transmitters that wirelessly transmit power and each of the transmitters is capable of transmitting a different first signal, the first signal transmitted by the transmitter, and a second signal respectively corresponding to the first signal, to perform an acquisition step of acquiring measured physical quantity and the second signal corresponding to the first signal respectively transmitted from the transmitter from a plurality of sensor devices, wherein the plurality of sensor devices, having receivers capable of receiving the power transmitted by the transmitter and receiving the first signal, respectively arranged at different positions, and being capable of measuring predetermined physical quantity, and an estimation step of estimating that the sensor device, transmitting the second signal, is positioned near the transmitter by identifying, among the transmitters, the transmitter transmitting the first signal corresponding to the second signal acquired in the acquisition step and transmitted from the sensor device based on the first correspondence information stored in the storage unit.

As a result, the information processing method can produce a similar effect to that of the above-described information processing system according to the one aspect.

### (Aspect 24)

An information processing program according to one aspect causes a computer to implement a storage function of storing a first correspondence information associating a position where a transmitter is arranged, wherein the transmitter is one or more transmitters that wirelessly transmit power and each of the transmitters is capable of transmitting a different first signal, the first signal transmitted by the transmitter, and a second signal corresponding to the first signal,an acquisition function of acquiring measured physical quantity and the second signal corresponding to the first signal respectively transmitted from the transmitter, from a plurality of sensor devices, wherein the plurality of sensor devices, having receivers capable of receiving the power transmitted by the transmitter and receiving the first signal respectively arranged at different positions, and being capable of measuring predetermined physical quantity; and an estimation function of estimating that the sensor device, transmitting the second signal, is positioned near the transmitter by identifying, among the transmitters, the transmitter transmitting the first signal corresponding to the second signal acquired by the acquisition function and transmitted from the sensor device based on the first correspondence information stored in the storage function.

As a result, the information processing program can produce a similar effect to that of the above-described information processing system according to the one aspect.

### (Aspect 25)

Air conditioning equipment according to one aspect is air conditioning equipment, that performs control based on temperatures measured by a plurality of temperature sensors arranged at predetermined positions in a space, wherein the plurality of temperature sensors are respectively arranged at predetermined arrangement positions, wherein it receives, in case where the temperature measured by the temperature sensor changes, a control signal for adjusting a temperature at a position where the temperature sensor is arranged, and performs control based on the control signal.

As a result, the air conditioning equipment can adjust, based on the temperature at the position where the temperature sensor is disposed, a temperature in an environment near the position where the temperature sensor is disposed.

### (Aspect 26)

In the air conditioning equipment according to the one aspect, wherein it receives, based on a first processing correspondence information associating an arrangement position of the temperature sensor and a target temperature at the arrangement position, the control signal such that a temperature measured by the temperature sensor comes closer to the target temperature associated with the arrangement position of the temperature sensor.

As a result, the air conditioning equipment can adjust, based on the temperature at the position where the temperature sensor is disposed, a temperature in an environment near the position where the temperature sensor is disposed to be finer and comfortable for a person who is located in the vicinity of the temperature sensor.

### (Aspect 27)

A lighting device according to one aspect is a lighting device, that performs control based on illuminances measured by a plurality of illuminance sensors arranged at predetermined positions in a space, wherein the plurality of illuminance sensors are respectively arranged at predetermined arrangement positions, wherein it receives, in case where the illuminance measured by the illuminance sensor changes, a control signal for adjusting a brightness at a position where the illuminance sensor is arranged, and performs control based on the control signal.

As a result, the lighting device can adjust, based on the illuminance at the position where the illuminance sensor is disposed, an illuminance in an environment near the position where the illuminance sensor is disposed.

### (Aspect 28)

In the lighting device according to the one aspect, wherein it receives, based on a second processing correspondence information associating an arrangement position of the illuminance sensor and a target illuminance at the arrangement position, the control signal such that an illuminance measured by the illuminance sensor comes closer to the target illuminance associated with the arrangement position of the illuminance sensor.

As a result, the lighting device can adjust, based on the illuminance at the position where the illuminance sensor is disposed, an illuminance in an environment near the position where the illuminance sensor is disposed to be finer and appropriate for a person who is located in the vicinity of the illuminance sensor.

### [REFERENCE SIGNS LIST]

- 1: information processing system
- 100: transmitter
- 101: phase locked loop circuit
- 102: amplifier circuit
- 103: directional coupler
- 200: sensor device
- 210: sensor communication unit
- 211: sensor receiving unit
- 212: sensor transmission unit
- 213: antenna
- 214: power feeding point
- 220: sensor unit
- 300: information processing device
- 310: control unit
- 311: acquisition unit
- 312: estimation unit
- 313: antenna control unit
- 314: processing control unit
- 315: reception unit
- 316: transmission control unit
- 317: output control unit
- 321: communication unit
- 322: storage unit
- 323: display unit
- 400: processing unit

## Claims

1. An information processing system comprising:
one or more transmitters that wirelessly transmit power, wherein each of the transmitters is capable of transmitting a different first signal;
a plurality of sensor devices, respectively arranged at different positions, being capable of measuring predetermined physical quantity, and having receivers which are capable of receiving a power transmitted from the transmitter and receiving the first signal; and
an information processing device being capable of acquiring, from the plurality of sensor devices, the physical quantity measured by each of the plurality of sensor devices and a second signal corresponding to the first signal transmitted from each of the transmitters,
wherein the information processing device comprises:
a storage unit storing a first correspondence information associating a position where the transmitter is arranged, the first signal transmitted by the transmitter, and the second signal corresponding to the first signal, and
an estimation unit estimating that the sensor device, transmitting the second signal, is positioned near the transmitter by identifying, among the transmitters, the transmitter transmitting the first signal corresponding to the second signal transmitted from the sensor device based on the first correspondence information stored in the storage unit.

2. An information processing system comprising:
one or more transmitters that wirelessly transmit power, wherein the transmitter is capable of transmitting a first signal;
a plurality of sensor devices, respectively arranged at different positions, being capable of measuring predetermined physical quantity, and having receivers which are capable of receiving a power transmitted from the transmitter and receiving the first signal; and
an information processing device being capable of acquiring, from the plurality of sensor devices, a signal representing the physical quantity measured by each of the plurality of sensor devices and a second signal corresponding to the first signal transmitted from each of the transmitters, wherein the information processing device comprises:
a storage unit storing a second correspondence information associating a distance between the transmitter and the sensor device, and the second signal corresponding to the first signal, and
an estimation unit estimating that the sensor device, transmitting the second signal, is positioned near the transmitter by identifying, among the transmitters, the transmitter having the distance closest to the sensor device that transmits the second signal based on the second correspondence information stored in the storage unit.

3. The information processing system according to claim 1 or 2, wherein
the information processing device includes an antenna control unit performing control such that directivity of an antenna of the transmitter is oriented toward a position of the sensor device estimated by the estimation unit.

4. The information processing system according to claim 3, wherein
the antenna control unit controls the antenna of the transmitter closest to the sensor device based on the position of the sensor device estimated by the estimation unit.

5. The information processing system according to any one of claims 1 to 4, wherein
the information processing device includes a processing control unit controlling a processing unit to perform predetermined processing for a position where the sensor device is arranged based on the physical quantity measured by the sensor device, the position of which is estimated by the estimation unit.

6. The information processing system according to claim 5, wherein
the processing unit is an air conditioner,
the sensor device includes a temperature sensor, and
the processing control unit controls, in case where a temperature measured by the temperature sensor changes, the air conditioner to adjust a temperature at a position where the temperature sensor is arranged.

7. The information processing system according to claim 6, wherein
the processing control unit has a first processing correspondence information associating an arrangement position of the sensor device and a target temperature at the arrangement position, and controls the air conditioner such that the temperature measured by the temperature sensor comes closer to the target temperature associated with the arrangement position of the sensor device.

8. The information processing system according to claim 5, wherein
the processing unit is a lighting device,
the sensor device includes an illuminance sensor, and
the processing control unit controls, in case where an illuminance measured by the illuminance sensor changes, the lighting device to adjust a brightness at a position where the illuminance sensor is arranged.

9. The information processing system according to claim 8, wherein
the processing control unit has a second processing correspondence information associating an arrangement position of the sensor device and a target illuminance at the arrangement position, and controls the lighting device such that the illuminance measured by the illuminance sensor comes closer to the target illuminance associated with the arrangement position of the sensor device.

10. The information processing system according to any one of claims 1 to 9, wherein
each of the transmitters includes a directional coupler for a signal of power transmitted from an antenna of the transmitter, and
the information processing device comprises:
a reception unit receiving a predetermined characteristic measured by each of the directional couplers, and
a transmission control unit performing control, in case where there occurs such a change that the predetermined characteristic received by the reception unit deteriorates,
to make transmission power of the transmitter, to which the directional coupler the characteristic of which has changed is connected, weaker than that the characteristic does not change.

11. The information processing system according to claim 10, wherein
the transmission control unit controls the transmitter to weaken the transmission power for a predetermined time period.

12. The information processing system according to claim 2, wherein
a plurality of transmitters are provided,
the second correspondence information stored in the storage unit is an information associating the distance between the transmitter and the sensor device and signal intensity of the second signal corresponding to the first signal, and
the estimation unit acquires signal intensities of a plurality of the second signals received by the plurality of transmitters, and identifies, among the plurality of transmitters, the transmitter having the distance closest to the sensor device that transmits the second signal based on the plurality of signal intensities and the second correspondence information.

13. The information processing system according to claim 12, wherein
the three or more transmitters are provided, and
the estimation unit:
acquires signal intensities of the plurality of second signals received by the at least three or more transmitters,
identifies, among the plurality of transmitters, the transmitter having the distance closest to the sensor device that transmits the second signal based on the plurality of signal intensities and the second correspondence information, and
identifies a position where the sensor device having the distance closest to the transmitter is arranged.

14. The information processing system according to claim 2, wherein
the estimation unit acquires signal intensities of the second signals received by the transmitters, and identifies, among the transmitters, the transmitter having the distance closest to the sensor device that transmits the second signal based on whether or not the signal intensity is a predetermined threshold value or more based on the signal intensities and the second correspondence information.

15. The information processing system according to claim 2, wherein
the three or more transmitters are provided,
the second correspondence information stored in the storage unit is an information associating a position where the sensor device is arranged and signal intensity of the second signal corresponding to the first signal, and
the estimation unit:
acquires signal intensities of the plurality of second signals received by the at least three or more transmitters,
identifies, among the plurality of transmitters, the transmitter having the distance closest to the sensor device that transmits the second signal based on the plurality of signal intensities and the second correspondence information, and
identifies a position where the sensor device having the distance closest to the transmitter is arranged.

16. The information processing system according to claim 2, wherein
the plurality of transmitters are provided, and
the estimation unit:
acquires angles of arrival of the plurality of second signals received by the plurality of transmitters, and
identifies, among the plurality of transmitters, the transmitter the transmitter having the distance closest to the sensor device that transmits the second signal based on the plurality of angles of arrival and the second correspondence information.

17. The information processing system according to any one of claims 2 and 12 to 16, wherein the estimation unit is provided in the transmitter.

18. The information processing system according to claim 1 or 2, wherein a power transmission signal transmitted from the transmitter is the first signal.

19. The information processing system according to claim 18, wherein the power transmission signal becomes the first signal on a condition that the power transmission signal is substantially consecutive wireless frequency signals having predetermined power, and the wireless frequency signals are intermittently transmitted from the transmitter at a predetermined period.

20. The information processing system according to claim 19, wherein a frequency band of the first signal and a frequency band of the second signal differ from each other.

21. The information processing system according to any one of claims 1, 2, or 18, wherein the sensor device transmits the physical quantity and the second signal simultaneously with the power transmission signal transmitted from the transmitter.

22. An information processing device comprising:
a storage unit storing a first correspondence information associating:
a position where a transmitter is arranged, wherein the transmitter is one or more transmitters that wirelessly transmit power and each of the transmitters is capable of transmitting a different first signal,
the first signal transmitted by the transmitter, and
a second signal corresponding to the first signal;
an acquisition unit acquiring measured physical quantity and the second signal corresponding to the first signal respectively transmitted from the transmitter, from a plurality of sensor devices, wherein the plurality of sensor devices, having receivers capable of receiving the power transmitted by the transmitter and receiving the first signal respectively arranged at different positions, and being capable of measuring predetermined physical quantity; and
an estimation unit estimating that the sensor device, transmitting the second signal, is positioned near the transmitter by identifying, among the transmitters, the transmitter transmitting the first signal corresponding to the second signal acquired by the acquisition unit and transmitted from the sensor device based on the first correspondence information stored in the storage unit.

23. An information processing method for causing a computer comprising a storage unit storing a first correspondence information associating:
position where a transmitter is arranged, wherein the transmitter is one or more transmitters that wirelessly transmit power and each of the transmitters is capable of transmitting a different first signal,
the first signal transmitted by the transmitter, and
a second signal respectively corresponding to the first signal, to perform:
an acquisition step of acquiring measured physical quantity and the second signal corresponding to the first signal respectively transmitted from the transmitter from a plurality of sensor devices, wherein the plurality of sensor devices, having receivers capable of receiving the power transmitted by the transmitter and receiving the first signal, respectively arranged at different positions, and being capable of measuring predetermined physical quantity, and
an estimation step of estimating that the sensor device, transmitting the second signal, is positioned near the transmitter by identifying, among the transmitters, the transmitter transmitting the first signal corresponding to the second signal acquired in the acquisition step and transmitted from the sensor device based on the first correspondence information stored in the storage unit.

24. An information processing program for causing a computer to implement:
a storage function of storing a first correspondence information associating:
a position where a transmitter is arranged, wherein the transmitter is one or more transmitters that wirelessly transmit power and each of the transmitters is capable of transmitting a different first signal,
the first signal transmitted by the transmitter, and
a second signal corresponding to the first signal;
an acquisition function of acquiring measured physical quantity and the second signal corresponding to the first signal respectively transmitted from the transmitter, from a plurality of sensor devices, wherein the plurality of sensor devices, having receivers capable of receiving the power transmitted by the transmitter and receiving the first signal respectively arranged at different positions, and being capable of measuring predetermined physical quantity; and
an estimation function of estimating that the sensor device, transmitting the second signal, is positioned near the transmitter by identifying, among the transmitters, the transmitter transmitting the first signal corresponding to the second signal acquired by the acquisition function and transmitted from the sensor device based on the first correspondence information stored in the storage function.

25. Air conditioning equipment, that performs control based on temperatures measured by a plurality of temperature sensors arranged at predetermined positions in a space, wherein the plurality of temperature sensors are respectively arranged at predetermined arrangement positions,
wherein it receives, in case where the temperature measured by the temperature sensor changes, a control signal for adjusting a temperature at a position where the temperature sensor is arranged, and performs control based on the control signal.

26. The air conditioning equipment according to claim 25, wherein it receives, based on a first processing correspondence information associating an arrangement position of the temperature sensor and a target temperature at the arrangement position, the control signal such that a temperature measured by the temperature sensor comes closer to the target temperature associated with the arrangement position of the temperature sensor.

27. A lighting device, that performs control based on illuminances measured by a plurality of illuminance sensors arranged at predetermined positions in a space, wherein the plurality of illuminance sensors are respectively arranged at predetermined arrangement positions,
wherein it receives, in case where the illuminance measured by the illuminance sensor changes, a control signal for adjusting a brightness at a position where the illuminance sensor is arranged, and performs control based on the control signal.

28. The lighting device according to claim 27, wherein it receives, based on a second processing correspondence information associating an arrangement position of the illuminance sensor and a target illuminance at the arrangement position, the control signal such that an illuminance measured by the illuminance sensor comes closer to the target illuminance associated with the arrangement position of the illuminance sensor.
